# EUROPEAN PATENT APPLICATION

(11) **EP 3 056 884 A1**
(43) Date of publication of application: **17.08.2016**
(21) Application number: 16155457.1
(22) Date of filing: 12.02.2016
(51) Int. Cl.: G01K 1/08, G01K 13/02

(54) **AIR TEMPERATURE SENSOR AND FABRICATION**

(30) Priority: 12.02.2015 US 201514621027
(71) Applicant: Rosemount Aerospace Inc., Burnsville MN 55306-4898 (US)
(72) Inventor: WIGEN, Scott, Eagan, MN 55123 (US)
(74) Representative: Iceton, Greg James

(57) **Abstract**

A method is disclosed for making an air temperature sensor comprises first generating a digital model of an air temperature sensor housing 10. The digital model is inputted into an additive manufacturing apparatus comprising an energy source. The additive manufacturing apparatus applies energy from the energy source to successively applied incremental quantities of a fusible material. The energy source fuses the successively applied incremental quantities of the fusible material to form incremental portions of the air temperature sensor housing 10 that accrete together to form the air temperature sensor housing.

## Description

### BACKGROUND OF THE INVENTION

This invention relates to an air temperature sensor, and specifically to methods of manufacturing a housing for such a sensor.

Air temperature sensors are used in a wide variety of industrial and vehicular applications. Total air temperature probes are often used on aircraft or other vehicles for measuring outside air temperature. Modem jet powered aircraft require very accurate measurement of outside air temperature (OAT) for inputs to the air data computer, engine thrust management computer, and other airborne systems. For these aircraft types, their associated flight conditions, and the use of total air temperature probes in general, air temperature is better defined by the following four temperatures: (1) Static air temperature (SAT) or (TS), (2) total air temperature (TAT) or (Tt), (3) recovery temperature (Tr), and (4) measured temperature (Tm). Static air temperature (SAT) or (TS) is the temperature of the undisturbed air through which the aircraft is about to fly. Total air temperature (TAT) or (Tt) is the maximum air temperature that can be attained by 100% conversion of the kinetic energy of the flight. The measurement of TAT is derived from the recovery temperature (Tr), which is the adiabatic value of local air temperature on each portion of the aircraft surface due to incomplete recovery of the kinetic energy. Temperature (Tr) is in turn obtained from the measured temperature (Tm), which is the actual temperature as measured, and which differs from recovery temperature because of heat transfer effects due to imposed environments. For measuring the TAT, TAT probes are well known in the art. These probes can be of a wide range of different types and designs, and can be mounted on various aircraft surfaces which expose the TAT probe to airflow. For example, common TAT probe mounting locations include aircraft engines and aircraft fuselages.

Of critical importance for temperature sensors such as total air temperature sensors is providing a housing that protects the temperature sensing element while delivering a continuous regulated flow of outside air to the temperature sensing element that accurately represents the temperature of the outside air (i.e., avoiding recirculating eddy currents that could lead to a false temperature measurement). It is also important to avoid ice buildup that could interfere with accurate temperature measurement, which is often accomplished by providing a heat source proximate to the sensor. In such cases, it is important to shield the sensing element from the heat source so that heat from the heat source does not interfere with accurate temperature measurement. In order to meet these objectives, air temperature sensor housing often has multiple chambers or passages to control airflow and provide radiation shielding, along with supports, braze, weld, or adhesive joints, and other features to provide structural integrity. The resulting structure is relatively complex, often consisting of dozens of parts with dozens of weld/braze joints. Such complexity in a relatively small structure often leads to variations in assembly, which can lead to variations in quality and performance, as well as higher manufacturing costs.

### BRIEF DESCRIPTION OF THE INVENTION

According to some aspects of the invention, a method for making an air temperature sensor comprises first generating a digital model of an air temperature sensor housing. The digital model is inputted into an additive manufacturing apparatus comprising an energy source. The additive manufacturing apparatus applies energy from the energy source to successively applied incremental quantities of a fusible material. The energy source fuses the successively applied incremental quantities of the fusible material to form incremental portions of the air temperature sensor housing that accrete together to form the air temperature sensor housing.

In some aspects of the invention, the air temperature sensor housing includes an air inlet, a first conduit in fluid communication with the air inlet, an air outlet in fluid communication with the channel, and a sensor support structure configured to retain a temperature sensor element mounted in the channel.

In some aspects of the invention, the air temperature sensor housing includes at least one special feature fabricated by the repeated application of energy to successively applied incremental quantities of fusible material. One such special feature is the sensor support structure, integral with the housing. Another special feature is a non-circular opening as an outlet in one of the airflow conduits. Another feature is an air swirler integral with and extending inwardly from a conduit. Yet another feature is an ice barrier integral with and extending inwardly from a conduit. The repeated application of energy to successively applied incremental quantities of fusible material can also be used to fabricate varied surface texture on an inner surface of a conduit to impact airflow.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1A is a schematic depiction of an air temperature sensor housing cross-section;
FIG. 1B is a schematic depiction of the air temperature sensor housing cross-section of FIG. 1A with a temperature sensing element therein;
FIG. 2 is a zoom view of a portion of the housing of FIG. 1A; and
FIG. 3 is a view of a housing with an integrated structure.

### DETAILED DESCRIPTION OF THE INVENTION

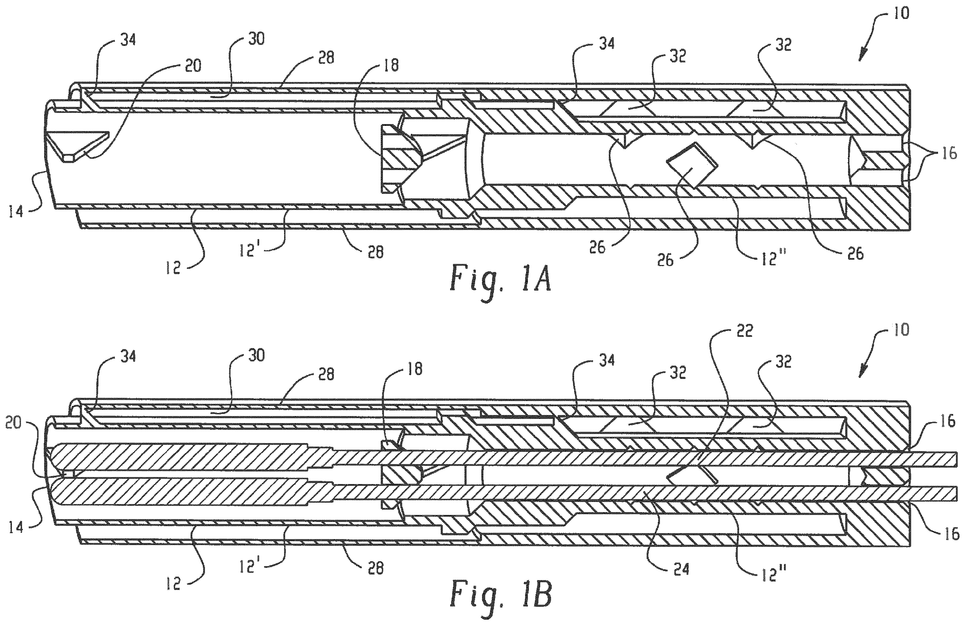

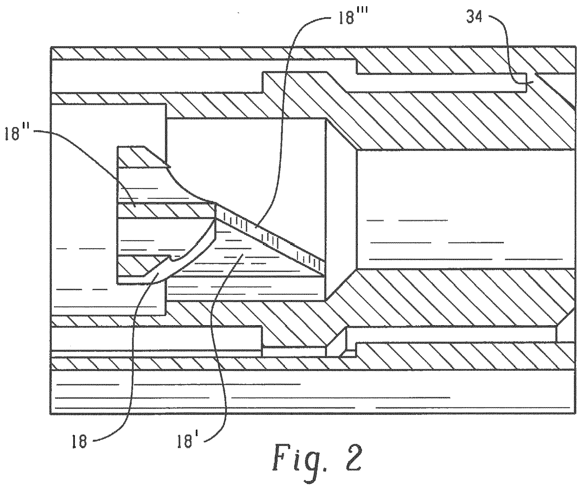

Referring now to the Figures, FIGS. 1A and 1B schematically depict an air temperature sensor 10. As shown in FIGS. 1A and 1B, an air temperature sensor includes an air temperature sensor housing 10 with a first conduit or tube 12 having an inlet 14. In some embodiments, the inlet can have a scoop (not shown), which can include a 90° or more bend if, for example, the housing is mounted with the longitudinal axis of the first tube 12 transverse to the direction of outside airflow. As is known in the art, one or more airfoils (not shown) can also be associated with the inlet 14. First tube 12 has a first section 12' having a first radial opening cross-section and a second section 12" having a second radial opening cross-sectional area smaller than the first radial opening cross-section. Also depicted is a transition between sections 12' and 12" with a ramped wall connecting the tube wall of section 12' and section 12" having a radial opening cross-section of intermediate cross-sectional area between the cross-sectional area of sections 12' and 12". The first tube 12 includes mounting sockets 16 and can include supports 18 and 20 for securing and supporting temperature sensing elements 22 and 24 within the first tube 12. It should be noted here that FIGS. 1A and 1B are identical except for the presence of the temperature sensing elements 22, 24, which are omitted from FIG. 1A for ease of illustration. As shown in more detail in FIG. 2, in some embodiments the supports configured like support 18, having a wall engagement section 18' protruding radially inwardly from the wall of the first tube 12, and a sensing element engagement section 18". In some embodiments, as shown in FIGS. 1 and 2, the wall engagement section 18' has an axially-extending surface portion 18'" that is angled with respect to the tube wall. The angled structures (20, 18, 34) can be built without the use of 3D build support structures that would then require post process removal. Incorporating the self-support angles speeds build time and reduces post build processing time. The angle with respect to the longitudinal direction of the tube wall can be greater than 0° and less than 90°, and more specifically can range from 0° to 60°. First tube 12 also has outlet openings 26. In operation, outside air enters the first tube 12 through opening 14, flows past and around the temperature sensing elements 22, 24 where temperature is measured, and exits through outlet openings 26.

In some embodiments, a second conduit or tube 28 is disposed concentrically around the first tube 12. The second tube 28 can protect the first tube from damage and radiation (e.g., heat radiation), as well as contribute to airflow management. For example, in many applications, such as on aircraft, the temperature sensor can be mounted on the fuselage or a forward-facing portion of an engine nacelle where they can be subject to ice formation, which can adversely affect the accuracy of temperature measurements. Therefore auxiliary heat is often provided in proximity to the exterior of the temperature sensor housing. The second tube 28 can provide radiation (heat) shielding around the first tube to limit the impact of external heat sources on the accuracy of the temperature measurement. In some embodiments, for airflow management purposes, a portion of air captured by an external air scoop (not shown) can be directed into the annular space 30 between the first tube 12 and the second tube 28 instead of the space inside first tube 12. In some embodiments, support tabs 34 are disposed between the first tube 12 and second tube 28 to maintain the radial position of the first tube within the second tube and to provide structural integrity. Support tabs 34 can be mechanically attached to both tubes 12 and 28, or can be attached to only one of the tubes 12 or 28 with an interference fit between itself and the other tube. Second tube 28 also includes outlet openings 32 for air exiting the sensor housing 10. The openings can be any shape. In some embodiments, either or both of the openings 26, 32 are non-circular, such as trapezoidal shaped. The non-circular openings of 26 and 32 incorporate self-supporting angles that allow for the passages to be built without 3D printed support material, which can increase build speed while reducing post build processing time.

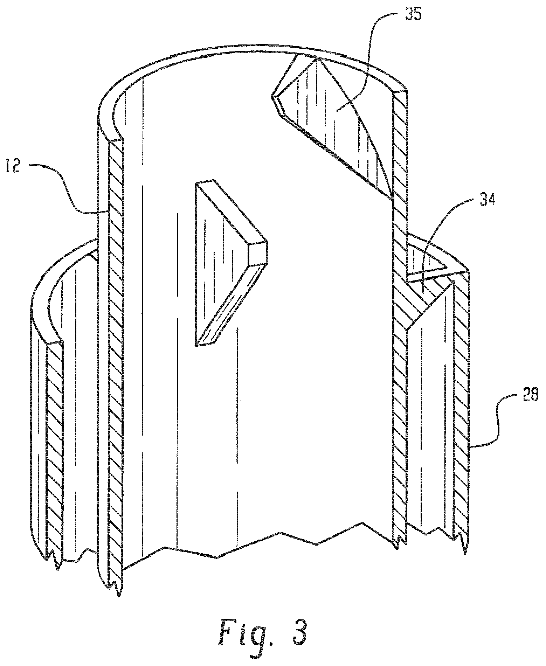

Additive manufacturing techniques can also be used to provide other features not readily feasible for inner conduit walls. Examples of such features can include ice barrier to either prevent ice formation or to direct any ice that does form to form in areas where it is not problematic. Other such features can include air swirlers or deflectors to create desired airflow patterns. FIG. 3 depicts the sensor housing from FIG. 1 with an ice barrier or air swirler 34 disposed on the inner wall of first tube 12. In some embodiments, multiple swirlers or ice dams can be disposed spaced circumferentially or axially on the tube wall, for example a plurality of swirlers could be disposed on a tube wall circumferentially evenly spaced around a position on the axis of the tube to provide a symmetric pattern of airflow displacement such as a vortex.

The digital models used in the practice of the invention are well-known in the art, and do not require further detailed description here. The digital model can be generated from various types of computer aided design (CAD) software, and various formats are known, including but not limited to SLT (standard tessellation language) files, AMF (additive manufacturing format) files, PLY files, wavefront (.obj) files, and others that can be open source or proprietary file formats.

Various types of additive manufacturing materials, energy sources, and processes can be used to fabricate the air temperature sensor housing and the individual features thereof that are described herein. The type of additive manufacturing process used depends in part on the type of material out of which it is desired to manufacture the sensor housing. In some embodiments, the sensor housing is made of metal, and a metal-forming additive manufacturing process can be used. Such processes can include selective laser sintering (SLS) or direct metal laser sintering (DMLS), in which a layer of metal or metal alloy powder is applied to the workpiece being fabricated and selectively sintered according to the digital model with heat energy from a directed laser beam. Another type of metal-forming process includes selective laser melting (SLM) or electron beam melting (EBM), in which heat energy provided by a directed laser or electron beam is used to selectively melt (instead of sinter) the metal powder so that it fuses as it cools and solidifies. Various metals and metal alloys can be used, including but not limited to CoCr, stainless steels, nickel base alloys, aluminum and titanium alloys. In some embodiments, the sensor housing is made of a polymer, and a polymer or plastic forming additive manufacturing process can be used. Such process can include stereolithography (SLA), in which fabrication occurs with the workpiece disposed in a liquid photopolymerizable composition, with a surface of the workpiece slightly below the surface. Light from a laser or other light beam is used to selectively photopolymerize a layer onto the workpiece, following which it is lowered further into the liquid composition by an amount corresponding to a layer thickness and the next layer is formed. Polymer housings can also be fabricated using selective heat sintering (SHS), which works analogously for thermoplastic powders to SLS for metal powders. Another exemplary additive manufacturing process that can be used for polymers or metals is fused deposition modeling (FDM), in which a metal or thermoplastic feed material (e.g., in the form of a wire or filament) is heated and selectively dispensed onto the workpiece through an extrusion nozzle.

While the invention has been described in detail in connection with only a limited number of embodiments, it should be readily understood that the invention is not limited to such disclosed embodiments. Rather, the invention can be modified to incorporate any number of variations, alterations or substitutions not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method for making an air temperature sensor, comprising
generating a digital model of an air temperature sensor housing (10);
inputting the digital model into an additive manufacturing apparatus or system comprising an energy source and ;
repeatedly applying energy from the energy source to successively applied incremental quantities of a fusible material to form the air temperature sensor housing (10) corresponding to the digital model; and
disposing a temperature sensing element in the air temperature sensor housing (10).

2. The method of claim 1, wherein the air temperature sensor housing (10) includes an air inlet (14), a first conduit (12) in fluid communication with the air inlet (14), an air outlet (26) in fluid communication with a channel, and a sensor support structure (18) configured to retain the temperature sensing element mounted in the channel.

3. The method of claim 2, wherein the air temperature sensor housing (10) includes at least one feature fabricated by said repeated application of energy to successively applied incremental quantities of fusible material, selected from:
the sensor support structure (18), integral with the housing (10);
a non-circular opening in the first conduit as said outlet;
an air swirler integral with and extending inwardly from the first conduit (12);
an ice barrier integral with and extending inwardly from the first conduit (12); and
varied radial cross-section of the first conduit (12); and
varied surface texture on the inner surface of the first conduit (12).

4. The method of claim 3, wherein the air temperature sensor housing (10) includes the feature of the sensor support structure (18) integral with the housing (10).

5. The method of claims 3 or 4, wherein the air temperature sensor housing (10) includes the feature of the non-circular opening in the first conduit (12) as said outlet.

6. The method of any of claims 3-5, wherein the air temperature sensor housing (10) includes the feature of the air swirler integral with and extending inwardly from the first conduit (12).

7. The method of any of claims 3-6, wherein the air temperature sensor housing (10) includes the feature of the ice barrier integral with and extending inwardly from the first conduit (12).

8. The method of any of claims 3-7, wherein the air temperature sensor housing (10) includes the feature of varied surface texture on the inner surface of the first conduit (12).

9. The method of any of claims 2-8, further comprising a second conduit (28) disposed concentrically around the first conduit (12), thereby providing an annular air space between the first and second conduits that is in fluid communication with the inlet (14).

10. The method of claim 9, wherein the air temperature sensor housing (10) includes at least one feature fabricated by said repeated application of energy to successively applied incremental quantities of fusible material, selected from a support tab between the first and second conduits and non-circular openings in the second conduit as said outlet.

11. The method of any of claims 2-10, wherein the first conduit (12) has a radial cross-section that varies along the length of the first conduit (12).

12. An air temperature sensor housing (10), comprising an air inlet (14), a first conduit (12) in fluid communication with the air inlet, an air outlet (26) in fluid communication with a channel, and a sensor support structure (18) configured to retain a temperature sensor mounted in the channel, wherein the air temperature sensor housing (10) includes at least one feature fabricated by said repeated application of energy to successively applied incremental quantities of fusible material, selected from:
the sensor support structure, integral with the housing (10);
a non-circular opening in the first conduit (12) as said outlet;
an air swirler integral with and extending inwardly from the first conduit (12);
an ice barrier integral with and extending inwardly from the first conduit (12); and
varied radial cross-section of the first conduit (12); and
varied surface texture on the inner surface of the first conduit (12).

13. The housing (10) of claim 12, further comprising a second conduit (28) disposed concentrically around the first conduit (12), thereby providing an annular airflow space between the first and second conduits that is in fluid communication with the inlet.

14. The housing (10) of claim 13, wherein the air temperature sensor housing (10) includes a support tab between the first and second conduits and non-circular openings in the second conduit as said outlet.

15. The housing (10) of any of claims 12-14, wherein the first conduit (12) has a radial cross-section that varies along the length of the first conduit (12).
